# EUROPÄISCHE PATENTSCHRIFT

(11) **EP 1 677 039 B1**
(45) Veröffentlichungstag und Bekanntmachung des Hinweises auf die Patenterteilung: **23.09.2009**
(21) Anmeldenummer: 04030999.9
(22) Anmeldetag: 30.12.2004
(51) Int. Cl.: F16L 27/08

(54) **Selbstarretierendes Durchflussgelenk**
Self blocking hinged fluid passage
Passage de fluide articulé autobloquant

(43) Veröffentlichungstag der Anmeldung: 05.07.2006
(73) Patentinhaber: KWC AG, 5726 Unterkulm (CH)
(72) Erfinder: Lehner, Michael, 5722 Graenichen (CH)
(74) Vertreter: Schaad, Balass, Menzl & Partner AG

(56) Entgegenhaltungen:
- EP-A- 0 559 997
- DE-C1- 3 616 073
- US-A- 359 394
- US-A- 3 341 229

## Beschreibung

Die vorliegende Erfindung betrifft ein Durchflussgelenk gemäss dem Anspruch 1 und eine Sanitärarmatur mit einem Durchflussgelenk nach Anspruch 18.

Durchflussgelenke dienen im Allgemeinen einer Umleitung eines strömenden Mediums, beispielsweise einer Flüssigkeit oder eines Gases, von einer Zuflussrichtung in eine Abflussrichtung. Dabei ist es vorteilhafter Weise möglich einen Gelenkwinkel, der zwischen der Zuflussrichtung und der Abflussrichtung gebildet ist, zu verstellen.

Ein bekanntes Durchflussgelenk ist beispielsweise in der DE-C-3616073 beschrieben. Dabei weist das Durchflussgelenk zwei mit Rohrstücken versehene Gelenkteile und ein die Flüssigkeit mindestens in einem Gelenkbereich führendes Schlauchstück auf. Die Gelenkteile sind kreiszylindrische Rohransätze, die an ihren Stirnseiten mit Verzahnungen versehen sind. Die Verzahnungen der Rohransätze stehen mit einer weiteren Verzahnung einer Abdeckscheibe in Eingriff, so dass ein unerwünschtes Verschwenken der Rohrstücke gegeneinander verhindert ist.

Bei diesem Durchflussgelenk wird das Medium in einem elastischen Schlauchstück geführt, dessen Lebensdauer unter anderem vom Material des Schlauchstücks, von den Eigenschaften des durchfliessenden Mediums aber auch von der Anzahl durchgeführter Biegezyklen zur Änderung des Gelenkwinkels begrenzt ist.

Durch die beschriebene Verzahnung ist das Durchflussgelenk mit einer Arretiervorrichtung ausgestattet, die ein unerwünschtes Rückstellen des Gelenkwinkels, hervorgerufen beispielsweise durch den Druck bzw. den Durchfluss eines Mediums oder die auf mechanisch mit dem Durchflussgelenk verbundene Armaturteile wirkende Gravitationskraft, verhindern soll. Insbesondere ein plötzlicher Anstieg des Drucks bzw. des Durchflusses im Durchflussgelenk führt zu einem Drehmoment, das darauf gerichtet ist, die Abflussrichtung entlang der Zuflussrichtung auszurichten. Dieses Phänomen ist beispielsweise beim Anstellen eines Wasserflusses durch einen Gartenschlauch zu beobachten.

Bei bekannten Durchflussgelenken wird dies in der Regel durch eine manuell lösbare Arretierung verhindert, die allerdings vor einer gewünschten Verschwenkung entweder gelöst oder beim Verschwenken überwunden werden muss.

US-A-3 341 229 offenbart ein drehbares Durchflussgelenk mit einem von einem externen Fluid steuerbaren Bremssystem.

Aufgabe der vorliegenden Erfindung ist es, ein Durchflussgelenk bereitzustellen, das bei einer hohen Lebensdauer, unabhängig vom durchfliessenden Medium und unabhängig von der Anzahl von Verschwenkungen, eine zuverlässige Arretierung bei jedem Druck des Mediums sicherstellt und bei dem ein manuelles Lösen einer Arretierung vor einem gewünschten Verschwenken nicht erforderlich ist.

Diese Aufgabe wird durch ein erfindungsgemässes Durchflussgelenk gemäss dem Anspruch 1 gelöst. Besonders vorteilhafte Ausführungsformen des erfindungsgemässen Durchflussgelenks sind mit den in den abhängigen Ansprüchen aufgeführten Merkmalen ausgestattet.

Das erfindungsgemässe Durchflussgelenk weist ein Zuflussgelenkteil mit einer Zuflussöffnung, in das aus einer Zuflussrichtung ein Medium einströmt, und ein Abflussgelenkteil mit einer Abflussöffnung auf, durch welche das Medium in eine vorgegebene Abflussrichtung ausströmt. Das Abflussgelenkteil ist gegen das Zuflussgelenkteil um eine gemeinsame Schwenkachse verschwenkbar angeordnet, so dass ein Gelenkwinkel zwischen der Zuflussrichtung und der Abflussrichtung verstellbar ist. Eine im Durchflussgelenk selbsttätig wirkende Arretiervorrichtung, welche eine Arretierkraft in Abhängigkeit vom Druck des Mediums im Durchflussgelenk anpasst, verhindert einerseits ein unerwünschtes eigenständiges Verschwenken des Abflussgelenkteils gegenüber dem Zuflussgelenkteil. Andererseits ist ein möglichst leichtgängiges Verdrehen beim erwünschten Verschwenken der Abflussrichtung gegen die Zuflussrichtung sichergestellt. Ein Schlauchstück im Inneren des Durchflussgelenkteils ist nicht erforderlich, was wiederum die Lebensdauer des erfindungsgemässen Durchflussgelenkteils erhöht.

Besonders bevorzugte Ausführungsformen werden im Folgenden anhand einer Zeichnung beschrieben. Die Figuren der Zeichnung zeigen im Einzelnen:
- Fig. 1: eine perspektivische Darstellung einer Sanitärarmatur mit einem Fusselement, erfindungsgemässen Durchflussgelenken und einem Wasserauslass;
- Fig. 2a: eine schematische Seitenansicht der in Fig. 1 gezeigten Sanitärarmatur bei einer Grundstellung der Durchflussgelenke mit einem zugeordneten Steuerelement in Form einer Mischbatterie zur Steuerung eines Durchflusses eines Mediums;

- Fig. 2b: eine schematische Seitenansicht der in Fig. 1 und Fig. 2a gezeigten Sanitärarmatur in einer ausgeschwenkten Stellung;
- Fig. 3: eine angeschnittene Perspektivdarstellung einer ersten Ausführungsform eines Durchflussgelenks, bei dem ein Anpresselement differentialkolbenartig ausgebildet ist;
- Fig. 4: einen Längsschnitt durch eine zweite Ausführungsform eines Durchflussgelenks mit einer elastischen Druckhülse;
- Fig. 5: einen Querschnitt entlang der Linie V-V des in Fig. 4 gezeigten Durchflussgelenks;
- Fig. 6: einen Längsschnitt durch ein Abflussgelenkteil des in Fig. 4 und Fig. 5 gezeigten Durchflussgelenks mit einer angeschnittenen, einen Ringkanal begrenzenden Nut und Sacklöchern zum Verbinden des Ringkanals mit einer Ausflussöffnung.

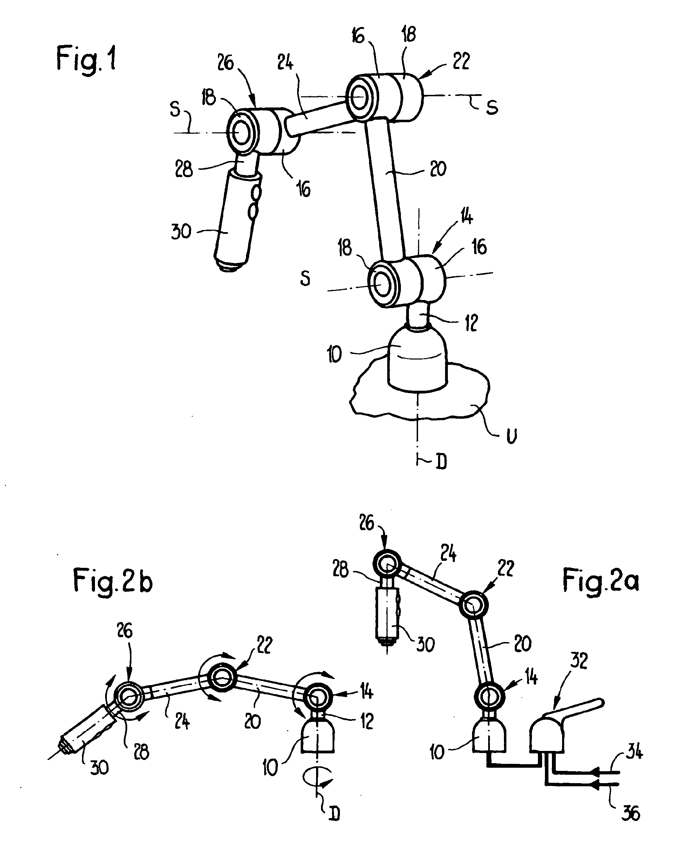

In Fig. 1 ist eine erfindungsgemässe Sanitärarmatur für einen Ausfluss eines Mediums M, in diesem Fall von Wasser, gezeigt, die mittels eines Fusselements 10 auf einer Unterlage U befestigt ist. Von einer konischen Zuspitzung des Fusselements 10 ausgehend verbindet strömungstechnisch und mechanisch ein Zuflussrohr 12 ein nicht gezeigtes Rohrleitungssystem mit einem ersten Durchflussgelenk 14. Dabei erstreckt sich das Zuflussrohr 12 im Wesentlichen senkrecht zur Unterlage U. Das Zuflussrohr 12 ist dazu strömungstechnisch an ein Zuflussgelenkteil 16 des ersten Durchflussgelenks 14 angeschlossen. Von einem dem Zuflussgelenkteil 16 zugeordneten Abflussgelenkteil 18 des ersten Durchflussgelenks 14 führt ein erstes Verbindungsrohr 20 zum Zuflussgelenkteil 16 eines zweiten Durchflussgelenks 22.

Das Abflussgelenkteil 18 und das Zuflussgelenkteil 16 des ersten Durchflussgelenks 14 sind bezüglich einer gemeinsamen Schwenkachse S, die im Wesentlichen parallel zur Unterlage U und im Wesentlichen senkrecht zum Zuflussrohr 12 orientiert ist, verschwenkbar. Durch ein Verschwenken des ersten Verbindungsrohres 20 bezüglich der Schwenkachse S werden auch alle stromabwärts angeordneten und mechanisch mit dem ersten Verbindungsrohr 20 verbundenen Teile der Sanitärarmatur gegenüber der Unterlage U verschwenkt.

In Analogie zum ersten Durchflussgelenk 14 ist auch beim zweiten Durchflussgelenk 22 das Abflussgelenkteil 18 gegenüber dem Zuflussgelenkteil 16 bezüglich der Schwenkachse S verschwenkbar. Ein zweites Verbindungsrohr 24 verbindet das Abflussgelenkteil 18 des zweiten Durchflussgelenks 22 strömungstechnisch und mechanisch mit dem Zuflussgelenkteil 16 eines dritten Durchflussgelenks 26. Das dritte Durchflussgelenk 26 besitzt vorzugsweise den gleichen Aufbau, wie die bereits erwähnten Durchflussgelenke 14 und 22. Vom Abflussgelenkteil 18 des dritten Durchflussgelenks 26 führt ein Abflussrohr 28 zu einem am freien Endbereich des Abflussrohrs 28 angeordneten Wasserauslass 30.

Der Wasserauslass 30 kann beispielsweise in Form eines offenen Rohrendes, einer Düse oder eines Brausekopfs ausgeführt sein. Durch den Wasserauslass 30 wird das Wasser, das vom Rohrleitungssystem über das Zuflussrohr 12, das erste Durchflussgelenk 14, das erste Verbindungsrohr 20, das zweite Durchflussgelenk 22, das zweite Verbindungsrohr 24, das dritte Durchflussgelenk 26 und das Abflussrohr 28 zugeführt wird, an die Umgebung, beispielsweise in ein Waschbecken, ein Abwaschbecken oder einen Behälter, abgegeben.

Aufgrund einer von einander unabhängigen Verschwenkbarkeit der einzelnen Durchflussgelenke 14, 22, 26 kann die Position des Ausflusselements 30 von einer in Fig. 2a gezeigten Grundstellung der Sanitärarmatur bis zu einer in Fig. 2b gezeigten ausgeschwenkten Stellung verändert werden. Dabei ist es möglich, dass der freie Gelenkwinkelbereich zum Verschwenken für jedes Durchflussgelenk 14, 22, 26 verschieden gross eingestellt ist. Zudem können kontinuierlich alle Gelenkwinkel oder gegebenenfalls lediglich diskrete Gelenkwinkel im gesamten freien Gelenkwinkelbereich eingestellt werden. Neben dem Verschwenken der Sanitärarmatur ist auch eine Drehung um eine zentral durch das Fusselelement 10 und das Zuflussrohr 12 verlaufende Drehachse D, die im Wesentlichen senkrecht zur Unterlage U orientiert ist, möglich. Auch ein entsprechender Drehwinkelbereich kann eingeschränkt sein und kontinuierlich oder diskret verteilte Winkelpositionen umfassen.

Um ein unerwünschtes selbstständiges oder durch den Druck im Medium M bewirktes Verschwenken bzw. Aufrichten der Sanitärarmatur zu verhindern, sind die Durchflussgelenke 14, 22, 26 mit Arretiervorrichtungen ausgestattet. Die Arretiervorrichtungen erzeugen eine dem Verschwenken entgegenwirkende Arretierkraft. Eine minimale Arretierkraft im gegenüber der Umgebung druckfreien Zustand kann dabei individuell voreingestellt werden und einer jeweiligen mechanischen Tragefunktionen der einzelnen Durchflussgelenke 14, 22, 26 angepasst werden.

Durch das unabhängiges Verschwenken und Drehen der Sanitärarmatur kann der Wasserausfluss 30 wenigstens nahezu jede beliebige Position innerhalb eines gedachten, um das Fusselement 10 zentrierten Kreises mit einem Radius, der im Wesentlichen der gestreckten Sanitärarmatur entspricht, erreichen. Durch eine Beschränkung des Gelenkwinkelbereichs der Durchflussgelenke 14, 22, 26 bzw. des Drehwinkelbereichs um die Drehachse S kann die Positionierung eingeschränkt sein.

Die mit dem Medium M in Kontakt stehenden Elemente, wie die Durchflussgelenke 14, 22, 26, die Rohre 12, 20, 24, 28 und der Wasserauslauf 30, sind vorzugsweise aus einem korrosionsträgem Metall oder einer entsprechenden Legierung gefertigt bzw. mit diesen beschichtet, so dass sich die erfindungsgemässe Sanitärarmatur insbesondere für den Ausfluss von Trinkwasser eignet.

In Fig. 2a ist ein der Sanitärarmatur zugeordnetes Steuerelement 32 in Form einer Mischbatterie 32 gezeigt, welches den Durchfluss des Wassers vom Rohrleitungssystem, insbesondere von einer Warmwasserzuleitung 34 und einer Kaltwasserzuleitung 36, steuert. Alternativ kann die Mischbatterie auch in das Fusselement 10 integriert sein oder durch ein anderes Steuerelement 32, beispielsweise einen Absperrhahn, ersetzt sein.

Im Folgenden wird der Aufbau und die Funktion von zwei besonders bevorzugten Ausführungen des erfindungsgemässen Durchflussgelenks 14, 22, 26, wie es in einer in Fig. 1 und Fig. 2a/2b gezeigten Sanitärarmatur Verwendung findet, detailliert beschrieben.

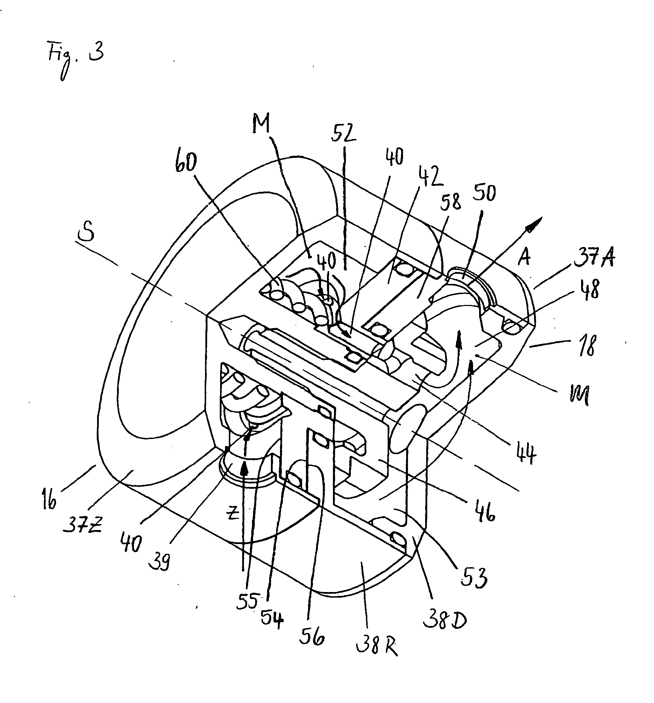

Eine erste Ausführungsform des erfindungsgemässen Durchflussgelenks 14, 22, 26 ist in Fig. 3 gezeigt. Diese Ausführung des Durchflussgelenks 14, 22, 26 weist ein becherartiges, dem Zuflussgelenkteil 16 zugeordnetes Zuflussgehäuse 37Z und ein ebenfalls becherartiges, dem Abflussgelenkteil 18 zugeordnetes Abflussgehäuse 37A auf, wobei beide, das Zuflussgehäuse 37Z und das Abflussgehäuse 37A koaxial bezüglich der Schwenkachse S und mit ihren Becheröffnungen einander zugewandt angeordnet sind. Während das Zuflussgehäuse 37Z einteilig ausgeführt ist, wird das Abflussgehäuse 37A durch einen Becherring 38R und einen stirnseitigen Gelenkdeckel 38D gebildet.

Im Zuflussgehäuse 37Z ist eine Zuflussöffnung 39 ausgeformt, durch welche das Medium M in das Zuflussgelenkteil 16 entlang einer Zuflussrichtung Z einströmt. Über Durchflusskanäle 40 in einem dem Zuflussgelenkteil 16 zugeordneten Anpresselement 42 und Ausnehmungen 44 einer das Zuflussgelenkteil 16 und das Abflussgelenkteil 18 verbindenden Verbindungsschraube 46 fliesst das Medium M in einen vom Abflussgehäuse 37A begrenzten Innenraum 48 des Abflussgelenkteils 18 ein. Durch eine im Abflussgehäuse 37A ausgeformte Abflussöffnung 50 tritt das Medium M dann in eine Abflussrichtung A aus. Diese, wie auch die später beschriebene zweite Ausführungsform benötigt keine elastischen Schlauchstücke und verfügt daher über eine deutlich höhere Lebensdauer im Vergleich zu Durchflussgelenken mit Schlauchstücken. Zur Darstellung des Durchflusses des Mediums M sind in Fig. 3 entsprechende Pfeile eingezeichnet.

Die Durchflusskanäle 40 und Ausnehmungen 44 verlaufen im Wesentlich parallel zur Schwenkachse S und senkrecht zur Zuflussrichtung Z bzw. Abflussrichtung A. Entsprechend wird das Medium M wenigstens abschnittsweise parallel zur Schwenkachse S und zur Zuflussrichtung Z bzw. Abflussrichtung A geführt. Auf diese Weise ist eine, wie im vorgängig genannten Beispiel eines Gartenschlauchs hervorgerufene, bei einer Druckerhöhung im Durchflussgelenk auftretende Richtungscharakteristik eines gegen der Arretierkraft wirkenden Drehmoments strömungstechnisch vermieden bzw. unterdrückt.

Das Zuflussgelenkteil 16 und das Abflussgelenkteil 18 sind axial entlang der Schwenkachse S mittels der Verbindungsschraube 46 verschiebefest aneinander befestigt. Im Zuflussgehäuse 37Z ist ein im Wesentlichen ringförmiger Zuflusskanal 52 und im Innenraum 48 des Abflussgehäuses 37A ist ein Abflussraum 53 ausgeformt. Der Zuflusskanal 52 wird abflussseitig durch das Anpresselement 42 begrenzt.

Das Anpresselement 42 ist in Form und Funktion differentialkolbenartig ausgebildet und in geringem Masse von etwa 0,1 mm bis 0,5 mm in Richtung der Schwenkachse S verschiebbar bezüglich des Zuflussgelenkteils 16 und des Abflussgelenkteils 18 gelagert. Eine den Zuflusskanal 52 zuflussseitig begrenzende ringförmige, hydraulisch aktive Fläche 55 des Anpresselements 42 ist dabei grösser bemessen als seine abflussgelenkteilseitig mit dem Medium M in Kontakt stehende hydraulisch aktive Fläche. Als hydraulisch aktive Fläche 55 wird eine mit dem Medium M in Kontakt stehende oder im Medium M befindliche Fläche, welche eine mechanische Stellkraft, hier die Arretierkraft, beeinflusst, bezeichnet.

Bei der in Fig. 3 gezeigten Ausführungsform erstreckt sich die hydraulisch aktive Fläche 55 wenigstens nahezu senkrecht zur Schwenkachse S. Aufgrund der Grösse der hydraulisch aktiven Fläche 55 und deren Orientierung ergibt sich bei gegebenem Druck im Zuflusskanal 52 eine resultierende, in Richtung des Abflussgelenkteils 18 wirkende Kraft auf das Anpresselement 42 bzw. ein entsprechender Anpressdruck auf mit dem Anpresselement 42 in mechanischem Kontakt stehende Teile.

Zusätzlich ist das Anpresselement 42 mittels einer Federkraft, die durch eine im Zuflussgehäuse 37Z abgestützte Spiralfeder 60 erzeugt wird, beaufschlagt und dadurch in Richtung des Abflussgelenkteils 18 vorgespannt. Abflussseitig weist das Anpresselement 42 eine der zuflussseitigen hydraulisch aktiven Fläche gegenüberliegende Anpressfläche 54 auf, die mit einer Pressfläche 56 eines am Becherring 38R des Abflussgelenkteils 18 ausgeformten Presselements 58 zusammenwirkt. In Abhängigkeit vom Druck des Mediums M im Durchflussgelenk 14, 22, 26 wird die Anpressfläche 54 verschieden stark gegen die Pressfläche 56 gedrückt und eine beim Verschwenken des Abflussgelenkteils 18 gegen das Zuflussgelenkteil 16 auftretende Reibung der beiden aufeinander liegenden Flächen 54, 56 entsprechend angepasst.

Die durch die Reibung zwischen der Anpressfläche 54 des Anpresselements 42 und der Pressfläche 56 des Presselements 58 hervorgerufene Arretierkraft wird somit bei einem gegenüber dem Umgebungsdruck erhöhten Druck im Medium vergrössert und erschwert auf diese Weise ein relatives Verschwenken des Abflussgelenkteils 18 gegenüber dem Zuflussgelenkteil 16. Die Arretierkraft wird dabei selbsttätig und ohne eine externe Steuerung oder Energiezufuhr an den Druck im Medium M angepasst.

Ein minimaler Anpressdruck zwischen der Anpressfläche 54 und der Pressfläche 56 bzw. eine minimale Arretierkraft kann durch ein Anzugsdrehmoment der Verbindungsschraube 46 voreingestellt werden. Der minimale Anpressdruck bestimmt die Leichtgängigkeit des Verschwenkens für den Fall, dass der Druck im Durchflussgelenk 14, 22, 26 gleich dem Umgebungsdruck ist, beispielsweise wenn kein Medium M durch das Durchflussgelenk 14, 22, 26 fliesst. Wie bei der Beschreibung der Sanitärarmatur bereits erwähnt, ist für die Einstellung der minimalen Arretierkraft auch die mechanische Tragfunktion des Durchflussgelenks 14, 22, 26 bezüglich angeschlossener Armaturteile, wie die in Fig. 1 bis Fig. 3 gezeigten Rohre 20, 24, 28, die stromabwärts angeordneten Durchflussgelenke 22, 24 und den Wasserauslauf 30, zu berücksichtigen. Dementsprechend können die Anzugsdrehmomente für die Verbindungsschrauben 46 für jedes einzelne der Durchflussgelenke 14, 22, 24 verschieden gross voreingestellt sein.

Das Anpresselement 42, das Presselement 58 und der abflussgelenkteilseitig angebrachte Gelenkdeckel 38D sind mittels O-Ringen 64 gegen ein Austreten des Mediums M an die Umgebung abgedichtet.

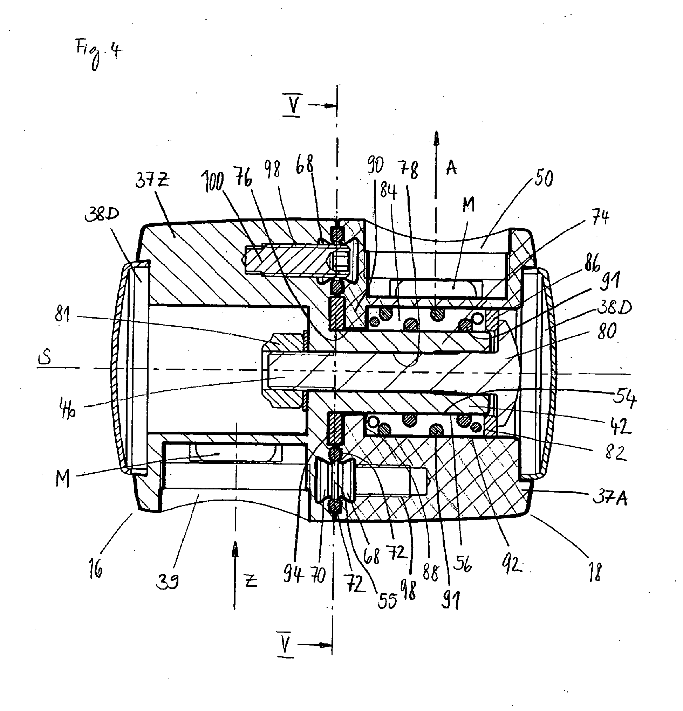

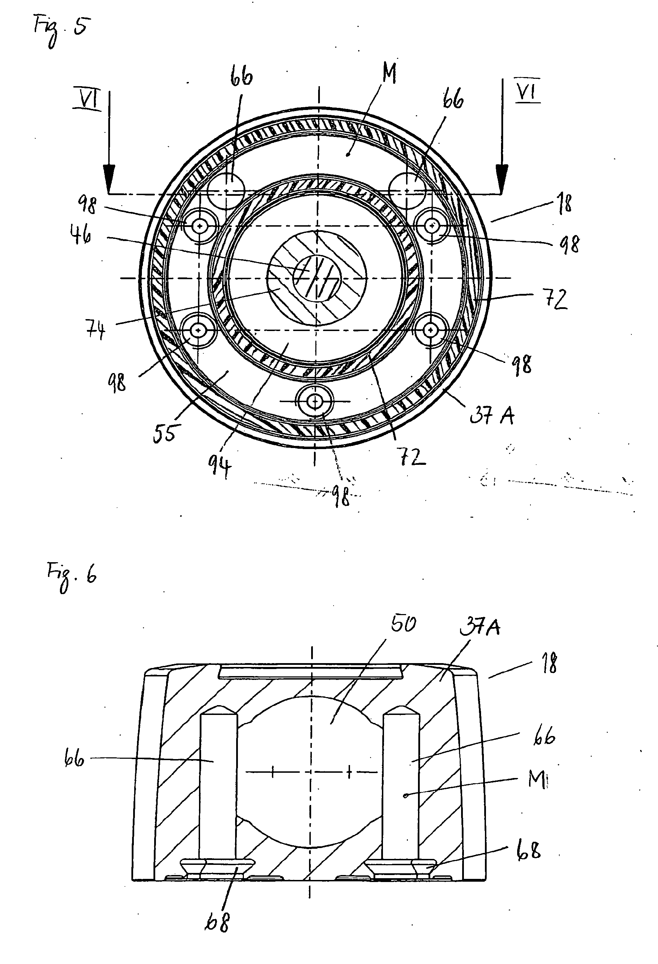

Im Folgenden wird eine zweite besonders bevorzugte Ausführungsform eines erfindungsgemässen Durchflussgelenks 14, 22, 26 beschrieben. Wie anhand des Längsschnitts in Fig. 4 und des Querschnitts in Fig. 5 gezeigt, weist das Durchflussgelenk 14, 22, 26 eine im Wesentlichen zylindrische äussere Form auf, wobei sowohl das Zuflussgehäuse 37Z als auch das Abflussgehäuse 37A stirnseitig mit Gelenkdeckeln 38D verschlossen sind. Die Gelenkdeckel 38D verschliessen bei dieser Ausführungsform nicht mit dem Medium M in Kontakt stehende Räume und dienen vielmehr der Abdeckung eines Zugangs zur Verbindungsschraube 46.

Wie bei der ersten Ausführungsform sind wiederum das Zuflussgelenkteil 16 und das Abflussgelenkteil 18 koaxial bezüglich der Schwenkachse S angeordnet und über die Verbindungsschraube 46 miteinander verbunden. Im Gegensatz zur ersten Ausführungsform sind allerdings hier das Zuflussgelenkteil 16 und das Abflussgelenkteil 18 in einem sehr kleinem Bereich von etwa 0,1 mm bis 0,3 mm axial zueinander verschiebbar ausgebildet.

Das Medium M fliesst über die im Zuflussgehäuse 37Z ausgeformte Zuflussöffnung 39 und mit ihr strömungstechnisch verbundene Sacklöcher 66, die analog zu den im Zusammenhang mit Fig. 5 und Fig. 6 detailliert beschriebenen Sacklöchern 66 des Abflussgelenkteils 18 ausgeführt sind, in einen durch hinterschnittene Nuten 68 gebildeten, radial umlaufenden Ringkanal 70 ein. Die Nuten 68 liegen sich dazu öffnungsseitig gegenüber und sind an sich zugewandten Seitenflächen einerseits des Zuflussgelenkteils 16 und andererseits eines dem Abflussgelenkteil 18 zugeordneten Innenauflagerings 90 ausgeformt. Der Innenauflagering 90 ist einstückig am Abflussgehäuse 37A angeformt, kann aber alternativ auch kolbenartig verschiebbar in Richtung der Schwenkachse S im Abflussgehäuse 37A gelagert sein. Im letzteren Fall ist dann das Zuflussgelenkteil 16 und das Abflussgelenkteil 18 verschiebefest miteinander verbunden.

Über die Sacklöcher 66 des Abflussgelenkteils 18, die einerseits zum Ringkanal 70 und andererseits zur Ausflussöffnung 50 geöffnet sind, verlässt das Medium M das Durchflussgelenk 14, 22, 26. Der Ringkanal 70 ist durch weitere O-Ringe 72 radial innen und radial aussen abgedichtet. Die hydraulisch aktive Fläche 55 wird bei dieser Ausführung durch eine ringförmige, zwischen dem radial äusseren und dem radial inneren O-Ring 72 im Ringkanal 70 liegende Fläche gebildet und verläuft ebenfalls im Wesentlichen senkrecht zur Schwenkachse S.

Ein am Zuflussgehäuse 37Z des Zuflussgelenkteils 16 ausgebildeter, zylindrischer Ringfortsatz 74 greift durch eine zentrale zylindrische Öffnung 76 im Innenauflagering 90 des Abflussgelenkteils 18 in das Abflussgelenkteil 18 ein. Der Ringfortsatz 74 bildet dabei das Anpresselement 42 mit der radial aussen umlaufenden, zylindrischen Anpressfläche 54.

In einer zentralen Durchführung 78 des Ringfortsatzes 74 ist die Verbindungsschraube 46 gelagert. Zuflussseitig ist die Verbindungsschraube 46 mittels einer Mutter 81 und einer Unterlegscheibe im Zuflussgehäuse 37Z abgestützt. Abflussseitig ist zwischen ihrem Kopf 80 und einer Stirnfläche 82 einer Druckhülse 84, die konzentrisch bezüglich des Ringfortsatzes 74 angeordnet ist und zylindrisch die Anpressfläche 54 des Ringfortsatzes 74 umgibt, eine Druckscheibe 86 geklemmt.

Eine gegenüberliegende zuflussseitige Stirnfläche 88 der Druckhülse 84 liegt am Innenauflagering 90 an. Somit ist die Druckhülse 84 einerends am Zuflussgelenkteil 16 und andererends am dem Abflussgelenkteil 18 zugeordneten Innenauflagering 90 abgestützt. Die axiale Ausdehnung der Druckhülse 84 ist durch den Abstand zwischen dem Innenauflagering 90 und der Druckscheibe 86 festgelegt.

Die Drückhülse 84 ist aus einem elastischen, mindestens nahezu volumenbeständigen Material, vorzugsweise einem Kunststoff, wie etwa POM, insbesondere Polyacetale wie Hostaform® C 9021 gefertigt. Sie besitzt die Form eines Hohlzylinders und besteht aus zwei Halbschalen. In umlaufenden U-förmigen Nuten der Druckhülse 84 sind radial innen und radial aussen Reibringe 91 derart eingelegt, dass sie radial wenigstens teilweise von der Druckhülse 84 hervorstehen. Dadurch liegen die radial innen angeordneten Reibringe 91 an der Anpressfläche 54 und die radial aussen angeordneten Reibringe an der zylindrischen Pressfläche 56 einer als Presselement 58 ausgeformten Innenwand 92 des Abflussgelenkteils 18, die konzentrisch mit der Anpressfläche 54 bezüglich der Schwenkachse S ausgeformt ist, an.

Wird nun die axiale Ausdehnung der Druckhülse 84 verringert, so führt dies zwangsläufig zu einer radialen Ausdehnung bzw. Aufwölbung der Druckhülse 84. Der radial durch die Reibringe 91 oder alternativ auch durch die Druckhülse 84 selbst vermittelte Anpressdruck zwischen der Anpressfläche 54 und der Pressfläche 56 wird dadurch erhöht. Der erhöhte Anpressdruck wiederum führt zu einer grösseren Reibung zwischen der Anpressfläche 54 und der Pressfläche 56 und damit zu einer erhöhten Arretierkraft gegen das relative Verschwenken des Abflussgelenkteils 18 gegenüber dem Zuflussgelenkteil 16.

Die axiale Ausdehnung der Druckhülse 84 und somit der Anpressdruck wird einerseits durch das Anzugsmoment der Verbindungsschraube 46 und andererseits durch den Druck des Mediums M im Ringkanal 70 gegenüber dem Umgebungsdruck, also durch die an der hydraulisch aktiven Fläche 55 wirkende resultierende Kraft bestimmt. Für den Fall, dass entweder das Anzugsmoment der Verbindungsschraube 46 oder der Druck des Mediums M im Ringkanal 70 erhöht wird, also bei Ersterem das Zuflussgelenkteil 16 in geringem Masse zum Abflussgelenkteil 18 hin gedrückt und bei Letzterem das Zuflussgelenkteil 16 in geringem Masse vom Abflussgelenkteil 18 weggepresst wird, verringert sich die axiale Ausdehnung der Druckhülse und infolge dessen erhöht sich der Anpressdruck zwischen der Anpressfläche 54 und der Pressfläche 56. Im letzteren Fall führt dies druckabhängig zu einer selbsttätig und kontinuierlich erhöhten Arretierkraft zwischen dem Ausflussgelenkteil 18 und dem Zuflussgelenkteil 16.

Der erstgenannte Fall der Einstellung des Anzugsmomentes bewirkt, wie im Zusammenhang mit der ersten Ausführungsform beschrieben, eine Einstellung der minimalen Arretierkraft, um insbesondere einer mechanischen Tragbelastung durch verbundene Armaturteile entgegenzuwirken.

Für ein besonders leichtgängiges Verschwenken im gegenüber dem Umgebungsdruck druckfreien Zustand des Durchflussgelenks 14, 22, 26, ist auf dem Ringfortsatz 74 eine Gleitscheibe 94 zwischen sich zugewandten Seitenflächen des Zuflussgelenkteils 16 und des Innenauflagerings 90 angeordnet.

In Fig. 5 ist ein Querschnitt entlang einer mit V bezeichneten Ebene durch das in Fig. 4 gezeigte Durchflussgelenk 14, 22, 26 gezeigt. Diese Ebene verläuft insbesondere durch den Ringkanal 70, die Gleitscheibe 94 und den Ringfortsatz 74 hindurch. Dadurch sind ringkanalseitige Eintrittsöffnungen der Sacklöcher 66 sowie ebenfalls zum Ringkanal 70 hin geöffnete Gewindebohrungen 98 sichtbar. In diese Gewindebohrungen 98 können, wie in Fig. 4 gezeigt, Gewindestifte 100 eingeschraubt sein. Im Zusammenwirken mit entsprechenden Gewindestiften 100, die in der gegenüberliegenden Nut 68 angeordnet sein können, wird der Gelenkwinkelbereich, in welchem das Abflussgelenkteil 18 gegenüber dem Zuflussgelenkteil 16 verschwenkbar ist, eingeschränkt.

In Fig. 6 ist ein Schnitt durch die in Fig. 5 mit VI bezeichneten Ebene durch das Abflussgelenkteil 18 ohne den Gelenkdeckel 38D gezeigt. Deutlich sind der angeschnittene Ringkanal 70, die Eintrittsöffnungen 96 der Sacklöcher 66 und die Abflussöffnung 50 sichtbar. Eine Verbindung zwischen den Sacklöchern 66 und der Abflussöffnung 50 wird beim Herstellungsprozess nach dem Bohren der Sacklöcher 66 und der Abflussöffnung 50 durch ein Hinterfräsen mittels einer durch die Abflussöffnung 50 eingeführten Frässcheibe herausgearbeitet.

Wie die Sanitärarmatur sind auch die mit dem Medium M in Kontakt stehenden Elemente des erfindungsgemässen Durchflussgelenks, wie das Zuflussgehäuse 37Z und das Abflussgehäuse 37A, vorzugsweise aus einem korrosionsträgem Metall oder einer entsprechenden Legierung gefertigt bzw. mit diesen beschichtet. Dadurch wird insbesondere ihr Einsatz für die Leitung von Trinkwasser ermöglicht.

## Patentansprüche

1. Durchflussgelenk zur Umleitung eines Mediums (M), das in einer Zuflussrichtung (Z) durch eine Zuflussöffnung (39) in ein Zuflussgelenkteil (16) einströmt und in einer durch eine Abflussöffnung (50) eines Abflussgelenkteils (18) vorgegebenen Abflussrichtung (A) ausströmt, wobei das Abflussgelenkteil (18) und das Zuflussgelenkteil (16) um eine gemeinsame Schwenkachse (S) relativ zueinander verschwenkbar angeordnet sind und in ihrer relativen Schwenkstellung zueinander mittels einer eine Arretierkraft bereitstellenden Arretiervorrichtung (42, 58) feststellbar sind, **gekennzeichnet durch** eine selbsttätig wirkende Arretiervorrichtung (42, 58), welche die Arretierkraft in Abhängigkeit vom Druck des Mediums (M) im Durchflussgelenk (14, 22, 26) anpasst.

2. Durchflussgelenk nach Anspruch 1, **dadurch gekennzeichnet, dass** die Arretiervorrichtung (42, 58) wenigstens eine dem Medium (M) ausgesetzte und die Grösse der Arretierkraft mitbestimmende, hydraulisch aktive Fläche (55) aufweist.

3. Durchflussgelenk nach Anspruch 2, **dadurch gekennzeichnet, dass** die Arretiervorrichtung (42, 58) ein dem Zuflussgelenkteil (16) zugeordnetes, die hydraulisch aktive Fläche (55) aufweisendes Anpresselement (42) mit einer Anpressfläche (54) und ein dem Abflussgelenkteil (18) zugeordnetes Presselement (58) mit einer mit der Anpressfläche (54) zusammenwirkbaren Pressfläche (56) aufweist, wobei ein erhöhter Druck im Medium (M) zu einer grösseren Arretierkraft führt.

4. Durchflussgelenk nach Anspruch 3, **dadurch gekennzeichnet, dass** das Anpresselement (42) differentialkolbenartig und seine Anpressfläche (54) ausflussseitig scheibenförmig ausgebildet sind, das Anpresselement (42) verschiebbar in Richtung der Schwenkachse (S) gegenüber dem Zuflussgelenkteil (16) und dem Abflussgelenkteil (18) gelagert ist und zuflussseitig und abflussseitig jeweils eine hydraulisch aktive Fläche (55) aufweist, wobei die zuflussseitige hydraulisch aktive Fläche (55) durch eine, der Anpressfläche (54) gegenüberliegenden Oberfläche des Anpresselements (42) gebildet ist, die Anpressfläche (54) im Wesentlichen senkrecht zur Schwenkachse (S) orientiert ist und vorzugsweise die Anpressfläche (54) und die Pressfläche (56) unmittelbar aneinander anliegen.

5. Durchflussgelenk nach Anspruch 4, **dadurch gekennzeichnet, dass** das Zuflussgelenkteil (16) ein becherartiges Zuflussgehäuse (37Z) und das Abflussgelenkteil (18) ein ebenfalls becherartiges Abflussgehäuse (37A) aufweisen, wobei das Zuflussgehäuse (37Z) und das Abflussgehäuse (37A) koaxial bezüglich der Schwenkachse (S) angeordnet sind, das Zuflussgelenkteil (16) und das Abflussgelenkteil (18) axial verschiebefest miteinander vorzugsweise durch eine Schraubverbindung (46) verbunden sind und im Zuflussgelenkteil (16) ein ringförmiger, mit der Zuflussöffnung (39) verbundener Zuflusskanal (52) und im Abflussgelenkteil (18) ein Abflussraum (53) ausgeformt sind.

6. Durchflussgelenk nach Anspruch 5, **dadurch gekennzeichnet, dass** das Anpresselement (42) mit der zuflussseitigen hydraulisch aktiven Fläche (55) den Zuflusskanal (52) im Inneren des Zuflussgelenkteils (16) begrenzt und einen Durchgangskanal (40) zum Durchleiten des Mediums (M) vom Zuflusskanal (52) zum Abflussraum (53) aufweist und das Anpresselement (42) mittels einer vorgespannten Spiralfeder (60) vom Zuflussgelenkteil (16) gegen die Pressfläche (56) des Abflussgelenkteils (18) gepresst wird.

7. Durchflussgelenk nach Anspruch 5 oder 6, **dadurch gekennzeichnet, dass** das Presselement (58) am Abflussgehäuse (37A) ausgeformt ist und den Abflussraum (53) begrenzt.

8. Durchflussgelenk nach einem der Ansprüche 2 bis 3, **dadurch gekennzeichnet, dass** die Anpressfläche (54) und die Pressfläche (56) im Wesentlichen zylinderförmig ausgebildet und konzentrisch bezüglich der Schwenkachse (S) angeordnet sind und wobei ein die Arretierkraft bewirkender Anpressdruck durch eine parallel zur Richtung der Schwenkachse (S) erfolgende, vom Druck des Mediums (M) im Durchflussgelenk (14, 22, 26) abhängige Stauchung einer elastischen, im Wesentlichen volumenbeständigen Druckhülse (84), welche radial zwischen der Anpressfläche (54) und der Pressfläche (56) angeordnet ist, vermittelt wird.

9. Durchflussgelenk nach Anspruch 8, **dadurch gekennzeichnet, dass** die Druckhülse (84) einerends am Zuflussgelenkteil (16) und andererends an einem dem Abflussgelenkteil (18) zugeordneten Innenauflagering (90) abgestützt ist.

10. Durchflussgelenk nach Anspruch 8 oder 9, **dadurch gekennzeichnet, dass** ein radial umlaufender Ringkanal (70) zwischen dem Zuflussgelenkteil (16) und dem Innenauflagering (90) ausgeformt ist, der jeweils halbseitig durch umlaufende Nuten (68) im Zuflussgelenkteil (16) und gegenüberliegend im Innenauflagering (90) sowie radial innen und radial aussen bezüglich der Nuten (68) angeordneten, dichtenden O-Ringen (72) gebildet ist, wobei eine ringförmige Fläche zwischen den O-Ringen (72) die hydraulisch aktive Fläche (55) bildet.

11. Durchflussgelenk nach einem der Ansprüche 8 bis 10, **dadurch gekennzeichnet, dass** die Druckhülse (84) aus einem Kunststoff, vorzugsweise einem Polyacetal gefertigt ist.

12. Durchflussgelenk nach einem der Ansprüche 8 bis 11, **dadurch gekennzeichnet, dass** in umlaufenden U-förmigen Nuten der Druckhülse (84) radial innen und radial aussen Reibringe (91) derart eingelegt sind, dass die Reibringe (91) radial wenigstens teilweise von der Druckhülse (84) hervorstehen und dadurch die radial innen angeordneten Reibringe (91) an der Anpressfläche (54) und die radial aussen angeordneten Reibringe (91) an der Pressfläche (56) anliegen bzw. reiben.

13. Durchflussgelenk nach einem der Ansprüche 8 bis 12, **dadurch gekennzeichnet, dass** die Druckhülse (84) zylinderförmig ausgebildet und aus zwei Halbschalen zusammengesetzt ist.

14. Durchflussgelenk nach einem der Ansprüche 8 bis 13, **dadurch gekennzeichnet, dass** zwischen dem Zuflussgelenkteil (16) und dem Innenauflagering (90) eine Gleitscheibe (94) angeordnet ist.

15. Durchflussgelenk nach einem der Ansprüche 9 bis 14, **dadurch gekennzeichnet, dass** der Innenauflagering (90) fest bezüglich des Abflussgehäuses (37A) gehalten ist.

16. Durchflussgelenk nach einem der Ansprüche 2 bis 15, **dadurch gekennzeichnet, dass** ein Gelenkwinkelbereich, in welchem das Abflussgelenkteil (18) gegen das Zuflussgelenkteil (16) um die Schwenkachse (S) verschwenkbar ist, mittels Begrenzungsanschlägen, vorzugsweise mittels am Zuflussgelenkteil (16) und/oder am Abflussgelenkteil (18) angeordneten Gewindestiften (100), eingeschränkt ist.

17. Durchflussgelenk nach einem der Ansprüche 2 bis 16, **dadurch gekennzeichnet, dass** das Medium (M) im Durchflussgelenk (14, 22, 26) wenigstens abschnittsweise parallel zur Schwenkachse (S) und wenigstens nahezu senkrecht zur Zuflussrichtung (Z) und zur Abflussrichtung (A) geführt ist und die hydraulisch aktive Fläche (55) senkrecht zur Schwenkachse (S) orientiert ist.

18. Sanitärarmatur mit einem Durchflussgelenk gemäss einem der Ansprüche 1 bis 17, **gekennzeichnet durch** einen Anschluss an ein Rohrleitungssystem mittels eines Zuflussrohrs (12), das an ein Zuflussgelenkteil (16) des Durchflussgelenks (14, 22, 26) angeschlossen ist, und einen Wasserauslass (30), der strömungstechnisch und/oder mechanisch über ein Abflussrohrs (20, 24) mit einem Abflussgelenkteil (18) des Durchflussgelenks (14, 22, 26) verbunden ist.

19. Sanitärarmatur nach Anspruch 18, **gekennzeichnet durch** wenigstens zwei Durchflussgelenke (14, 22, 26), wobei jeweils ein Abflussgelenkteil (18) eines stromaufwärts angeordneten Durchflussgelenks (14, 22) über ein Verbindungsrohr (20, 24) strömungstechnisch und/oder mechanisch mit einem Zuflussgelenkteil (16) eines stromabwärts angeordneten weiteren Durchflussgelenks (22, 26) verbunden ist.

20. Sanitärarmatur nach Anspruch 18 oder 19, **gekennzeichnet durch** ein strömungstechnisch zugeordnetes, den Durchfluss des Mediums (M) **durch** die Sanitärarmatur beeinflussendes Steuerelement (32), vorzugsweise in Form eines Absperrhahns oder einer Mischbatterie.

21. Sanitärarmatur nach Anspruch 19 oder 20, **dadurch gekennzeichnet, dass** die Durchflussgelenke (14, 22, 26) auch im gegenüber der Umgebung druckfreien Zustand jeweils mit einer unterschiedlich grossen Arretierkraft ausgestattet sind, um insbesondere mechanisch mit ihnen verbundene Armaturteile zu tragen.

## Claims

1. Flowthrough joint for diverting a medium (M), which flows into an inflow joint part (16) through an inflow opening (39) in an inflow direction (Z) and flows out in an outflow direction (A) predetermined by an outflow opening (50) of an outflow joint part (18), the outflow joint part (18) and the inflow joint part (16) being arranged pivotably relative to one another about a common pivoting axis (S) and being fixable in their relative pivoting position in relation to one another by means of a locking device (42, 58) providing a locking force, **characterized by** an automatically acting locking device (42, 58) which adapts the locking force depending on the pressure of the medium (M) in the flowthrough joint (14, 22, 26).

2. Flowthrough joint according to Claim 1, **characterized in that** the locking device (42, 58) comprises at least one hydraulically active surface (55) which is exposed to the medium (M) and codetermines the magnitude of the locking force.

3. Flowthrough joint according to Claim 2, **characterized in that** the locking device (42, 58) comprises a pressing-on element (42) with a pressing-on surface (54), which element is assigned to the inflow joint part (16) and comprises the hydraulically active surface (55), and a pressing element (58) with a pressing surface (56) which can interact with the pressing-on surface (54), which element is assigned to the outflow joint part (18), an increased pressure in the medium (M) leading to a greater locking force.

4. Flowthrough joint according to Claim 3, **characterized in that** the pressing-on element (42) is designed like a differential piston and its pressing-on surface (54) is of disk-shaped design on the outflow side, and the pressing-on element (42) is mounted displaceably relative to the inflow joint part (16) and the outflow joint part (18) in the direction of the pivoting axis (S) and comprises a hydraulically active surface (55) in each case on the inflow side and on the outflow side, the inflow-side hydraulically active surface (55) being formed by a surface of the pressing-on element (42) lying opposite the pressing-on surface (54), the pressing-on surface (54) being oriented essentially at right angles to the pivoting axis (S) and the pressing-on surface (54) and the pressing surface (56) preferably bearing directly against one another.

5. Flowthrough joint according to Claim 4, **characterized in that** the inflow joint part (16) comprises a cup-like inflow housing (37Z) and the outflow joint part (18) comprises a likewise cup-shaped outflow housing (37A), the inflow housing (37Z) and the outflow housing (37A) being arranged coaxially relative to the pivoting axis (S), the inflow joint part (16) and the outflow joint part (18) being interconnected non-displaceably axially preferably by a screwed connection (46), and an annular inflow duct (52) connected to the inflow opening (39) being formed in the inflow joint part (16) and an outflow space (53) being formed in the outflow joint part (18).

6. Flowthrough joint according to Claim 5, **characterized in that** the pressing-on element (42) delimits with the inflow-side hydraulically active surface (55) the inflow duct (52) inside the inflow joint part (16) and comprises a flowthrough duct (40) for conducting the medium (M) through from the inflow duct (52) to the outflow space (53), and the pressing-on element (42) is pressed by the inflow joint part (16) against the pressing surface (56) of the outflow joint part (18) by means of a prestressed helical spring (60).

7. Flowthrough joint according to Claim 5 or 6, **characterized in that** the pressing element (58) is formed on the outflow housing (37A) and delimits the outflow space (53).

8. Flowthrough joint according to one of Claims 2 to 3, **characterized in that** the pressing-on surface (54) and the pressing surface (56) are essentially of cylindrical design and arranged concentrically relative to the pivoting axis (S), a pressing-on pressure bringing about the locking force being provided by compression, which takes place parallel to the direction of the pivoting axis (S) and is dependent on the pressure of the medium (M) in the flowthrough joint (14, 22, 26), of an elastic pressure sleeve (84) of essentially constant volume which is arranged radially between the pressing-on surface (54) and the pressing surface (56).

9. Flowthrough joint according to Claim 8, **characterized in that** the pressure sleeve (84) is supported at one end on the inflow joint part (16) and at the other end on the inner bearing ring (90) assigned to the outflow joint part (18).

10. Flowthrough joint according to Claim 8 or 9, **characterized in that** an annular duct (70) running around radially is formed between the inflow joint part (16) and the inner bearing ring (90), which duct is formed in each case on one side by grooves (68) running around in the inflow joint part (16) and opposite in the inner bearing ring (90) and also sealing O rings (72) arranged radially on the inside and radially on the outside relative to the grooves (68), an annular surface between the O rings (72) forming the hydraulically active surface (55).

11. Flowthrough joint according to one of Claims 8 to 10, **characterized in that** the pressure sleeve (84) is made from a plastic, preferably a polyacetal.

12. Flowthrough joint according to one of Claims 8 to 11, **characterized in that** friction rings (91) are inserted radially on the inside and radially on the outside in circumferential U-shaped grooves of the pressure sleeve (84) in such a way that the friction rings (91) protrude radially at least partly from the pressure sleeve (84) and, by virtue of this, the friction rings (91) arranged radially on the inside, bear or rub against the pressing-on surface (54) and the friction rings (91) arranged radially on the outside, bear or rub against the pressing surface (56).

13. Flowthrough joint according to one of Claims 8 to 12, **characterized in that** the pressure sleeve (84) is of cylindrical design and consists of two half-shells.

14. Flowthrough joint according to one of Claims 8 to 13, **characterized in that** a sliding disk (94) is arranged between the inflow joint part (16) and the inner bearing ring (90).

15. Flowthrough joint according to one of Claims 9 to 14, **characterized in that** the inner bearing ring (90) is held firmly relative to the outflow housing (37A).

16. Flowthrough joint according to one of Claims 2 to 15, **characterized in that** a joint angle range in which the outflow joint part (18) is pivotable about the pivoting axis (S) in relation to the inflow joint part (16) is limited by means of limiting stops, preferably by means of threaded pins (100) arranged on the inflow joint part (16) and/or on the outflow joint part (18).

17. Flowthrough joint according to one of Claims 2 to 16, **characterized in that** the medium (M) in the flowthrough joint (14, 22, 26) is at least in sections guided parallel to the pivoting axis (S) and at least virtually at right angles to the inflow direction (Z) and to the outflow direction (A) and the hydraulically active surface (55) is oriented at right angles to the pivoting axis (S).

18. Sanitary fitting with a flowthrough joint according to one of Claims 1 to 17, **characterized by** a connection to a pipe system by means of an inflow pipe (12), which is connected to an inflow joint part (16) of the flowthrough joint (14, 22, 26), and a water outlet (30), which is connected in terms of flow and/or mechanically to an outflow joint part (18) of the flowthrough joint (14, 22, 26) via an outflow pipe (20, 24).

19. Sanitary fitting according to Claim 18, **characterized by** at least two flowthrough joints (14, 22, 26), in each case an outflow joint part (18) of a flowthrough joint (14, 22) arranged upstream being, via a connecting pipe (20, 24), connected in terms of flow and/or mechanically to an inflow joint part (16) of a further flowthrough joint (22, 26) arranged downstream.

20. Sanitary fitting according to Claim 18 or 19, **characterized by** a control element (32) assigned for flow purposes, preferably in the form of a stopcock or a mixing battery, which influences the flowthrough of the medium (M) through the sanitary fitting.

21. Sanitary fitting according to Claim 19 or 20, **characterized in that** the flowthrough joints (14, 22, 26) are in each case provided with a locking force of different size in the pressure-free state in relation to the surrounding environment as well in order in particular to support fitting parts connected mechanically to them.

## Revendications

1. Passage articulé destiné à dévier un fluide (M), qui afflue dans une direction d'afflux (Z) à travers une ouverture d'afflux (39) dans une partie d'afflux articulée (16) et qui sort dans une direction d'évacuation (A) prédéfinie par une ouverture d'évacuation (50) d'une partie d'évacuation articulée (18), la partie d'évacuation articulée (18) et la partie d'afflux articulée (16) étant disposées de manière à pouvoir pivoter l'une par rapport à l'autre autour d'un axe de pivotement commun (S) et pouvant être fixées dans leur position de pivotement relative l'une par rapport à l'autre au moyen d'un dispositif de verrouillage (42, 58) produisant une force de verrouillage, **caractérisé par** un dispositif de verrouillage (42, 58) agissant automatiquement, qui adapte la force de verrouillage en fonction de la pression du fluide (M) dans le passage articulé (14, 22, 26).

2. Passage articulé selon la revendication 1, **caractérisé en ce que** le dispositif de verrouillage (42, 58) présente au moins une surface active hydrauliquement (55) exposée au fluide (M) et déterminant l'amplitude de la force de verrouillage.

3. Passage articulé selon la revendication 2, **caractérisé en ce que** le dispositif de verrouillage (42, 58) présente un élément de pressage (42) associé à la partie d'afflux articulée (16), présentant la surface active hydrauliquement (55), avec une surface de pressage (54) et un élément de pression (58) associé à la partie d'évacuation articulée (18), avec une surface de pression (56) pouvant coopérer avec la surface de pressage (54), une pression accrue dans le fluide (M) conduisant à une force de verrouillage plus importante.

4. Passage articulé selon la revendication 3, **caractérisé en ce que** l'élément de pressage (42) est réalisé sous forme de piston différentiel et sa surface de pressage (54) est réalisée sous forme de disque du côté de la sortie, l'élément de pressage (42) est monté de manière déplaçable dans la direction de l'axe de pivotement (S) par rapport à la partie d'afflux articulée (16) et à la partie d'évacuation articulée (18), et présentant à chaque fois, du côté de l'afflux et du côté de l'évacuation, une surface active hydrauliquement (55), la surface active hydrauliquement (55) du côté de l'afflux étant formée par une surface de l'élément de pressage (42) opposée à la surface de pressage (54), la surface de pressage (54) est orientée essentiellement perpendiculairement à l'axe de pivotement (S) et de préférence la surface de pressage (54) et la surface de pression (56) s'appliquent directement l'une contre l'autre.

5. Passage articulé selon la revendication 4, **caractérisé en ce que** la partie d'afflux articulée (16) présente un boîtier d'afflux en forme de gobelet (37Z) et la partie d'évacuation articulée (18) présente un boîtier d'évacuation également en forme de gobelet (37A), le boîtier d'afflux (37Z) et le boîtier d'évacuation (37A) étant disposés coaxialement par rapport à l'axe de pivotement (S), la partie d'afflux articulée (16) et la partie d'évacuation articulée (18) étant connectées l'une à l'autre de manière fixée en translation axiale de préférence par une connexion vissée (46), et un canal d'afflux (52) annulaire connecté à l'ouverture d'afflux (39) étant formé dans la partie d'afflux articulée (16) et un espace d'évacuation (53) étant formé dans la partie d'évacuation articulée (18).

6. Passage articulé selon la revendication 5, **caractérisé en ce que** l'élément de pressage (42) avec la surface active hydrauliquement (55) du côté de l'afflux limite le canal d'afflux (52) à l'intérieur de la partie d'afflux articulée (16) et présente un canal de passage (40) pour guider le fluide (M) du canal d'afflux (52) vers l'espace d'évacuation (53) et l'élément de pressage (42) est pressé au moyen d'un ressort spiral précontraint (60) par la partie d'afflux articulée (16) contre la surface de pression (56) de la partie d'évacuation articulée (18).

7. Passage articulé selon la revendication 5 ou 6, **caractérisé en ce que** l'élément de pression (58) est formé sur le boîtier d'évacuation (37A) et limite l'espace d'évacuation (53).

8. Passage articulé selon l'une quelconque des revendications 2 à 3, **caractérisé en ce que** la surface de pressage (54) et la surface de pression (56) sont réalisées essentiellement sous forme cylindrique et sont disposées concentriquement par rapport à l'axe de pivotement (S), une pression de pressage engendrant la force de verrouillage étant réalisée par une déformation par compression, appliquée parallèlement à la direction de l'axe de pivotement (S), dépendant de la pression du fluide (M) dans le passage articulé (14, 22, 26), d'un manchon de pression (84) élastique et de volume essentiellement constant, qui est disposé radialement entre la surface de pressage (54) et la surface de pression (56).

9. Passage articulé selon la revendication 8, **caractérisé en ce que** le manchon de pression (84) est supporté à une extrémité sur la partie d'afflux articulée (16) et à l'autre extrémité sur une bague d'appui intérieure (90) associée à la partie d'évacuation articulée (18).

10. Passage articulé selon la revendication 8 ou 9, **caractérisé en ce qu'**un canal annulaire radialement périphérique (70) est formé entre la partie d'afflux articulée (16) et la bague d'appui intérieure (90), lequel est formée à chaque fois à moitié par des rainures périphériques (68) dans la partie d'afflux articulée (16) et du côté opposé dans la bague d'appui intérieure (90) ainsi que par des joints toriques (72) d'étanchéité disposés radialement à l'intérieur et radialement à l'extérieur par rapport aux rainures (68), une surface annulaire formant entre les joints toriques (72) la surface active hydrauliquement (55).

11. Passage articulé selon l'une quelconque des revendications 8 à 10, **caractérisé en ce que** le manchon de pression (84) se compose d'un plastique, de préférence un polyacétal.

12. Passage articulé selon l'une quelconque des revendications 8 à 11, **caractérisé en ce que** des bagues de friction radialement internes et radialement externes (91) sont insérées dans des rainures périphériques en forme de U du manchon de pression (84) de telle sorte que les bagues de friction (91) fassent saillie radialement au moins en partie depuis le manchon de pression (84) et que de ce fait les bagues de friction (91) disposées radialement à l'intérieur s'appliquent ou frottent contre la surface de pressage (54) et que les bagues de friction (91) disposées radialement à l'extérieur s'appliquent ou frottent contre la surface de pression (56).

13. Passage articulé selon l'une quelconque des revendications 8 à 12, **caractérisé en ce que** le manchon de pression (84) est réalisé sous forme cylindrique et est constitué de deux demi-coquilles.

14. Passage articulé selon l'une quelconque des revendications 8 à 13, **caractérisé en ce qu'**entre la partie d'afflux articulée (16) et la bague d'appui intérieure (90) est disposée une rondelle de glissement (94).

15. Passage articulé selon l'une quelconque des revendications 9 à 14, **caractérisé en ce que** la bague d'appui intérieure (90) est maintenue fixement par rapport au boîtier d'évacuation (37A).

16. Passage articulé selon l'une quelconque des revendications 2 à 15, **caractérisé en ce qu'**une région coudée d'articulation, dans laquelle la partie d'évacuation articulée (18) peut pivoter autour de l'axe de pivotement (S) vers la partie d'afflux articulée (16) est restreinte au moyen de butées de limitation, de préférence au moyen de broches filetées (100) disposées sur la partie d'afflux articulée (16) et/ou sur la partie d'évacuation articulée (18).

17. Passage articulé selon l'une quelconque des revendications 2 à 16, **caractérisé en ce que** le fluide (M) est guidé dans le passage articulé (14, 22, 26) au moins en partie parallèlement à l'axe de pivotement (S) et au moins pratiquement perpendiculairement à la direction d'afflux (Z) et à la direction d'évacuation (A), et la surface active hydrauliquement (55) est orientée perpendiculairement à l'axe de pivotement (S).

18. Robinetterie sanitaire comprenant un passage articulé selon l'une quelconque des revendications 1 à 17, **caractérisée par** un raccord à un système de conduite tubulaire au moyen d'un tube d'afflux (12), qui est raccordé à une partie d'afflux articulée (16) du passage articulé (14, 22, 26), et par une sortie d'eau (30), qui est connectée par une technique fluidique et/ou mécaniquement par le biais d'un tube d'évacuation (20, 24) à une partie d'évacuation articulée (18) du passage articulé (14, 22, 26).

19. Robinetterie sanitaire selon la revendication 18, **caractérisée par** au moins deux passages articulés (14, 22, 26), une partie d'évacuation articulée (18) d'un passage articulé disposé en amont (14, 22) étant à chaque fois connectée par le biais d'un tube de connexion (20, 24) par une technique fluidique et/ou mécaniquement à une partie d'afflux articulée (16) d'un passage articulé (22, 26) supplémentaire disposé en aval.

20. Robinetterie sanitaire selon la revendication 18 ou 19, **caractérisée par** un élément de commande (32) associé par une technique fluidique, influençant le passage du fluide (M) à travers la robinetterie sanitaire, de préférence en forme de robinet de coupure ou de batterie de mélange.

21. Robinetterie sanitaire selon la revendication 19 ou 20, **caractérisée en ce que** les passages articulés (14, 22, 26) sont également soumis à chaque fois à une force de verrouillage d'amplitude différente, même dans l'état sans pression par rapport à l'environnement, afin de supporter notamment des parties de robinetterie connectées à eux mécaniquement.
